# EUROPEAN PATENT SPECIFICATION

(11) **EP 1 503 106 B1**
(45) Date of publication and mention of the grant of the patent: **02.01.2008**
(21) Application number: 04006326.5
(22) Date of filing: 17.03.2004
(51) Int. Cl.: F16G 11/00, E06B 9/326, B65H 75/06

(54) **Pull-cord control device with adjustable cord length**
Bedienungsvorrichtung mit Zugschnur mit verstellbarer Schnurlänge
Dispositif de commande à tirage par cordon avec longueur de cordon réglable

(30) Priority: 31.07.2003 IT MI20030373
(43) Date of publication of application: 02.02.2005
(73) Proprietor: Vimar SpA, 36063 Marostica, (Vicenza) (IT)
(72) Inventor: Gusi, Piero Camillo, 36063 Marostica (Vicenza) (IT)
(74) Representative: Petruzziello, Aldo

(56) References cited:
- DE-C- 722 014
- US-A- 2 118 731
- US-A- 5 139 208
- US-A- 5 518 198
- US-A- 5 735 329

## Description

The present invention refers to a pull-cord control device of the type normally used in an electrical system to activate bell or buzzer signalling systems.

Said pull-cord control devices, normally used to activate signalling means, are installed in different environments - such as, for example, bathrooms, bedrooms, hospital wards and/or dormitories - at a height that differs from case to case to comply with the requirements (including legal requirements) imposed by the specific use and are controlled by means of a cord and of a knob placed at the end of the cord.

The length of the cord must be adjusted on a case-by-case basis to adjust it to the height at which the pull-cord control device is installed and to the type of use (above a bath or high up above a shower tray, next to a bed head, etc.)

Said adjustment is currently made by cutting the cord at the desired length, but this cutting does not allow the pull-cord control device to be re-used in another application that requires a longer cord, unless the pull-cord control device is dismantled to replace the existing cord with a longer one.

This operation is not always easy and it is in any case costly at least due to the need to discard the replaced piece of cord, which is normally not re-used.

US 5,518,198 discloses a safety cord reel comprising a storage reel that is secured to a window-shade cord and is used for receiving a varying amount of cord around the storage reel.

US 5,735,329 discloses a connector for connecting a plurality of pull cords to a knob or tassel. A wedge cleat releasable engages the pull cord and releasable connect the same to a tassel. A surplus cord core integral with and depending from the cleat receives and retains surplus cord wound thereon.

The pull-cord control device to which the present invention refers comprises a knob that allows the length of the cord to be adapted to the specific application without cutting said cord, thus overcoming the drawbacks and/or the limitations of the above described pull-cord control devices of the prior art in a simple and economical manner.

A pull-cord control device made according to the invention has at least the features set forth in claim 1; further features of said pull-cord control device are set forth in the dependent claims.

An exemplary and non-limiting embodiment of the invention will be described hereunder with reference to the appended drawings, in which:
- Figure 1 shows diagrammatically an exploded perspective view of a knob made according to the invention;
- Figures 2 and 3 show, respectively, a perspective view and a top view of the spool belonging to the knob of Figure 1, without the cord;
- Figures 4 and 5 show, respectively, a rear perspective view and a side view of the body of the knob of Figure 1, without the spool.
   In the appended drawings corresponding elements will be identified by the same reference numerals.

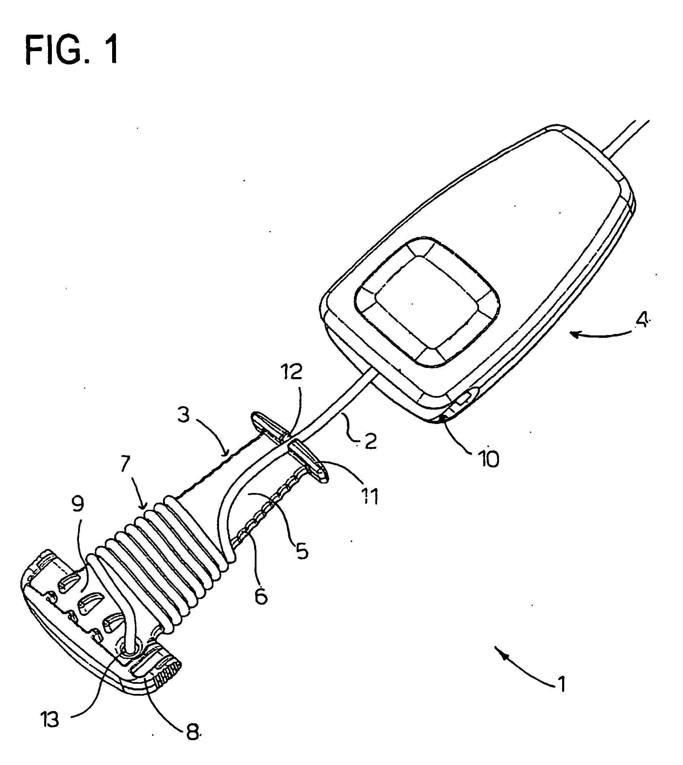

Figure 1 shows diagrammatically an exploded perspective view of a knob 1, made according to the invention, belonging to a per se known pull-cord control device and controlled by means of a cord 2: the knob 1 comprises a spool 3 - whereon a piece of cord 2 of a preset length is wound - and a cover 4 wherein the spool 3 is inserted.

The cover 4 has essentially aesthetic purposes and can therefore be omitted without departing from the scope of the invention.

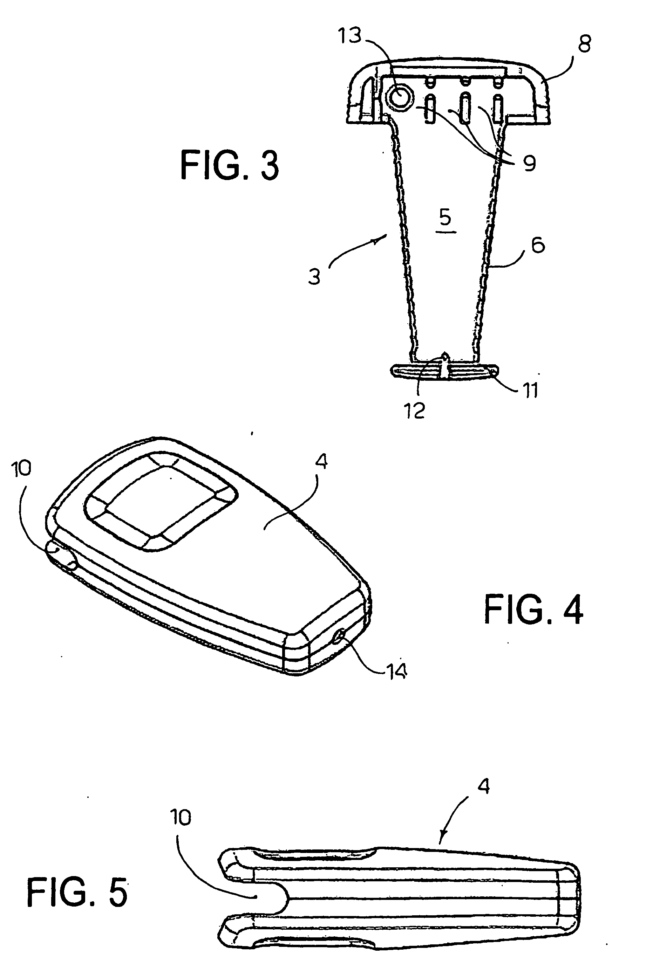

The cord 2 emerging from a through-hole 14 (Figure 4) - present in the region of the cover 4 of the knob 1 opposite that in which the spool 3 is inserted - controls the pull-cord control device, omitted in the appended figures for the sake of simplicity of the graphic representation.

The cord 2 is unwound from the spool 3 and wound on the spool 3, respectively, on a case-by-case basis to give it the length required for the specific use.

The pre-set length of the piece of cord 2 is preferably no less that the maximum height at which the pull-cord control device can be installed.

The spool 3 comprises a body 5 along each of the lateral sides of which there is formed a plurality of hollows (only one of which is indicated in Figures 1-3 with reference numeral 6) which hold in place the coils 7 of the cord 2 wound on the body 5 of the spool 3, preventing them from becoming tangled.

In the embodiment described here, the body 5 is a flat body with an elongated trapezoid shape but, without departing from the scope of the invention, the body 5 may take on a different shape from that illustrated by way of example in Figures 1-3.

If - as in the embodiment described here - the cover 4 is present, the trapezoid body 5 has at its larger base an element 8 bearing means 9 (consisting, in the embodiment described here, of a plurality of teeth) able to couple reversibly with per se know coupling means - complementary to the means 9, situated inside the cover 4 of the knob 1 and not visible in the appended figures - to assemble the spool 3 to the cover 4 when the spool 3 is inserted completely in a space 10 - with a shape complementary to that of the spool 3 - present on the cover 4; the outer surface of the element 8 preferably joins with that of the cover 4 to give the assembled knob 1 an aesthetically pleasing appearance.

At its smaller base the trapezoid body 5 has a further body 11 having means 12 - preferably a V-shaped cut - able to lock the cord 2 not wound on the body 5 of the spool 3.

The cord 2, after having been inserted in the through hole 14 (Figure 4) of the cover 4 of the knob 1, is inserted in a hole 13 formed in the element 8 of the spool 3 and locked therein in a per se known manner (for example by means of a knot), wound on the body 5 forming a plurality of coils 7 and locked by forcing it into the cut 12; if there is the cover 4, the knob 1 is subsequently assembled by inserting the spool 3 into the cover 4 and making the excess cord 2 emerge from the through hole 14.

In Figure 1 the cord 2 forms a limited number of coils 7 on the spool 3, but said number of coils 7 is purely indicative and not limiting and in any case it depends on the length of the cord 2 which remains wound on the spool 3 each time.

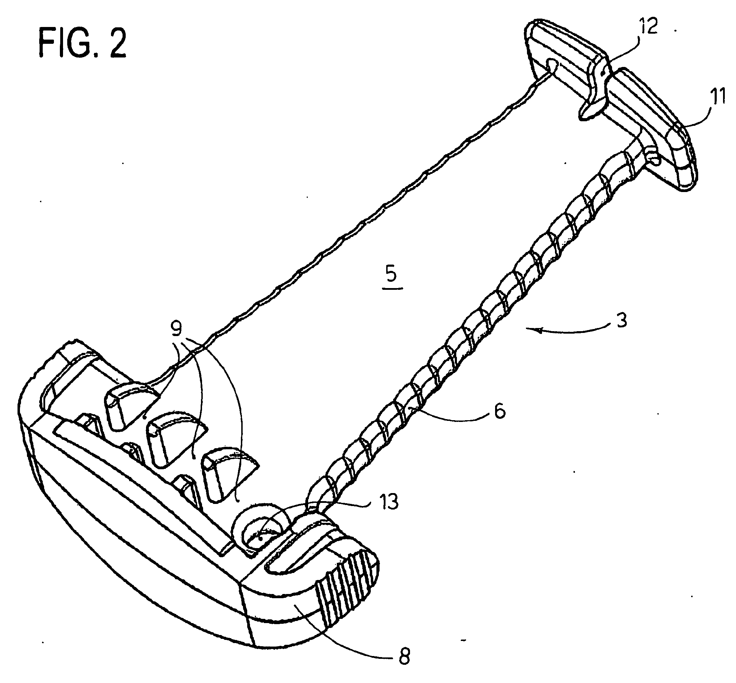

Figures 2 and 3 show, respectively, a perspective view and a top view of the spool 3 belonging to the knob 1 of Figure 1, without the cord 2; in said figures the body 5, the hollows 6 made along each of the lateral sides of the body 5, the element 8 - situated at the larger base of the body 5 - which bears the coupling means 9 and the further body 11 which has the locking means 12 for the cord 2 not wound on the body 5 of the spool 3 are visible.

Figures 4 and 5 show, respectively, a rear perspective view and a side view of the cover 4 of the knob 1, without the spool 3: in the rear perspective view of Figure 4 there are visible the hole 14 from which the cord 2 (omitted in Figure 4) emerges and the space 10 - situated in the region of the cover 4 opposite that where there is the hole 14 and of a shape complementary to that of the spool 3 - in which the spool 3 is inserted to assemble the knob 1, whilst in the side view in Figure 5 only the space 10 is visible.

Possible further variants with respect to what is described make occur to a person skilled in the art; however, said variants accessible to a person skilled in the art are to be understood as coming within the scope of the invention as set forth in the claims.

## Claims

1. A pull-cord control device controlled by means of a cord (2) and of a knob (1) placed at the end of the cord (2) not connected to the pull-cord control device, wherein the knob (1) comprises at least one spool (3) having a body (5) on which a piece of cord (2) of a pre-set length is wound and each time the cord (2) is unwound from the spool (3) or wound on the spool (3), respectively, to give it the length required for the specific use, **characterised in that** along each of the lateral sides of said body (5) there is formed a plurality of hollows (6) able to retain the coil (7) of the cord (2) wound on the body (5) of the spool (3) and **in that**, at its smaller base, the body (5) has a further body (11) having means (12) able to lock the cord (2) not wound on the body (5) of the spool (3).

2. A pull-cord control device according to claim 1, **characterised in that** the knob (1) further comprises a cover (4) in which the spool (3) is inserted.

3. A pull-cord control device according to claim 1 or 2, **characterised in that** the pre-set length of the piece of cord (2) is no less than the maximum height at which the pull-cord control device can be installed.

4. A pull-cord control device according to any one of the preceding claims, **characterised in that** the body (5) is a flat body with an elongated trapezoid shape.

5. A pull-cord control device according to any one of the preceding claims, **characterised in that** the locking means (12) consist of a V-shaped cut formed in the further body (11) of the spool (3).

6. A pull-cord control device according to any one of the preceding claims, **characterised in that** the cord (2), after having been locked to the body (5) of the spool (3), is inserted in a hole (13) made in the element (8) of the spool (3) and locked therein, wound on the body (5) of the spool (3) forming a plurality of coils (7) and locked by forcing it into the locking means (12).

7. A pull-cord control device according to claims 2 and 6, **characterised in that** the cord (2) is inserted in a through hole (14) present in the cover (4) of the knob (1) before being inserted in the hole (13) made in the element (8) of the spool (3) and locked therein.

8. A pull-cord control device according to claim 7, **characterised in that** the knob (1) is subsequently assembled by inserting the spool (3) into the cover (4) and making the excess cord (2) emerge from the through hole (14) of the cover (4).

9. A pull-cord control device according to any one of the claims 2 to 8, **characterised in that**, at its larger base, the body (5) has an element (8) bearing means (9) able to couple reversibly with coupling means - complementary to the means (9) - placed inside the cover (4) of the knob (1)to assemble the spool (3) to the cover (4) of the knob (1) when the spool (3) is completely inserted in a space (10) present in the cover (4) of the knob (1).

10. A pull-cord control device according to claim 9, **characterised in that** the coupling means (9) consist of a plurality of teeth able to couple reversibly with coupling means placed on the inside of the cover (4) of the knob (1).

11. A pull-cord control device according to claim 9 or 10, **characterised in that** the outer surface of the element (8) of the spool (3) joins with that of the cover (4) of the knob (1)

12. A pull-cord control device according to any one of the preceding claims, **characterised in that** the cover (4) of the knob (1) has a hole (14) from which the cord (2) emerges and a space (10) - situated in the region of the cover (4) opposite that where the hole (14) is present and having a shape complementary to that of the spool (3) - in which the spool (3) is inserted to assemble the knob (1).

## Patentansprüche

1. Bedienungsvorrichtung mit Zugschnur, die mittels einer Schnur (2) und eines Handgriffs (1) betätigt wird, der am Ende der Schnur (2) vorgesehen ist, die nicht mit der Bedienungsvorrichtung mit Zugschnur verbunden ist, wobei der Handgriff (1) mindestens eine Spule (3) umfasst, die mit einem Körper (5) ausgestattet ist, auf den eine Schnurlänge (2) mit einer voreingestellten Länge aufgewickelt ist, und die Schnur (2) jedes Mal von der Spule (3) abgewickelt oder auf die Spule (3) aufgewickelt wird, um ihr die für die vorgesehene Anwendung erforderliche Länge zu geben, **dadurch gekennzeichnet, dass** entlang jeder der Seiten des Körpers (5) mehrere Vertiefungen (6) ausgebildet sind, die die Wicklung (7) der Schnur (2), die auf den Körper (5) der Spule (3) aufgewickelt ist, halten, und dass der Körper (5) an seinem kleineren Ende einen weiteren Körper (11) aufweist, der mit einem Mittel (12) ausgestattet ist, das die Schnur (2), die nicht auf dem Körper (5) der Spule (3) aufgewickelt ist, arretiert.

2. Bedienungsvorrichtung mit Zugschnur nach Anspruch 1, **dadurch gekennzeichnet, dass** der Handgriff (1) ferner eine Abdeckung (4) umfasst, in der die Spule (3) eingesetzt ist.

3. Bedienungsvorrichtung mit Zugschnur nach Anspruch 1 oder 2, **dadurch gekennzeichnet, dass** die voreingestellte Länge der Schnurlänge (2) nicht kleiner ist als die maximale Höhe, in der die Bedienungsvorrichtung mit Zugschnur eingebaut werden kann.

4. Bedienungsvorrichtung mit Zugschnur nach einem der vorhergehenden Ansprüche, **dadurch gekennzeichnet, dass** der Körper (5) ein flacher Körper mit einer länglichen trapezförmigen Form ist.

5. Bedienungsvorrichtung mit Zugschnur nach einem der vorhergehenden Ansprüche, **dadurch gekennzeichnet, dass** das Arretierungsmittel (12) aus einem v-förmigen Schnitt besteht, der in dem weiteren Körper (11) der Spule (3) ausgebildet ist.

6. Bedienungsvorrichtung mit Zugschnur nach einem der vorhergehenden Ansprüche, **dadurch gekennzeichnet, dass** die Schnur (2), nachdem sie an dem Körper (5) der Spule (3) arretiert wurde, in ein Loch (13) eingeführt wird, das in dem Element (8) der Spule (3) ausgebildet ist, und darin arretiert wird, auf den Körper (5) der Spule (3) aufgewickelt wird, die mehrere Windungen (7) ausbildet und durch Hineindrücken in das Arretierungsmittel (12) arretiert wird.

7. Bedienungsvorrichtung mit Zugschnur nach Anspruch 2 und 6, **dadurch gekennzeichnet, dass** die Schnur (2) in ein Durchgangsloch (14) eingeführt wird, das in der Abdeckung (4) des Handgriffes (1) vorgesehen ist, bevor sie in das Loch (13) eingesetzt wird, das in dem Element (8) der Spule (3) ausgebildet ist, und darin arretiert wird.

8. Bedienungsvorrichtung mit Zugschnur nach Anspruch 7, **dadurch gekennzeichnet, dass** der Handgriff (1) anschließend durch Einsetzen der Spule (3) in die Abdeckung (4) und Herausführen der übrigen Schnur (2) durch das Durchgangsloch (14) der Abdeckung (4) zusammengesetzt wird.

9. Bedienungsvorrichtung mit Zugschnur nach einem der Ansprüche 2 bis 8, **dadurch gekennzeichnet, dass** der Körper (5) an seinem größeren Ende mit einem Element (8) ausgestattet ist, das ein Mittel (9) trägt, das umkehrbar mit dem Kuppelmittel verbunden werden kann - ergänzend zu dem Mittel (9) - das in der Abdeckung (4) des Handgriffes (1) angeordnet ist, um die Spule (3) mit der Abdeckung (4) des Handgriffes (1) zu verbinden, wenn die Spule (3) vollständig in einem Raum (10) eingesetzt ist, der in der Abdeckung (4) des Handgriffes (1) vorgesehen ist.

10. Bedienungsvorrichtung mit Zugschnur nach Anspruch 9, **dadurch gekennzeichnet, dass** das Kuppelmittel (9) aus mehreren Zähnen besteht, die umkehrbar mit den Kuppelmitteln verbunden werden können, die auf der Innenseite der Abdeckung (4) des Handgriffes (1) vorgesehen sind.

11. Bedienungsvorrichtung mit Zugschnur nach Anspruch 9 oder 10, **dadurch gekennzeichnet, dass** die Außenfläche des Elementes (8) der Spule (3) mit der Abdeckung (4) des Handgriffes (1) zusammenkommt.

12. Bedienungsvorrichtung mit Zugschnur nach einem der vorhergehenden Ansprüche, **dadurch gekennzeichnet, dass** die Abdeckung (4) des Handgriffes (1) ein Loch (14), aus dem die Schnur (2) austritt, und einen Raum (10) aufweist - in dem Bereich der Abdeckung (4) gegenüber der Stelle gelegen, an der das Loch (14) vorgesehen ist, und mit einer der Spule (3) entsprechenden Form ausgeführt - in den die Spule (3) eingesetzt wird, um den Handgriff (1) zusammenzubauen.

## Revendications

1. Dispositif de commande à tirage par cordon, commandé au moyen d'un cordon (2) et au moyen d'un bouton (1) qui est placé à l'extrémité d'un cordon (2) et qui n'est pas raccordé au dispositif de commande à tirage par cordon, le bouton (1) comprenant au moins une bobine (3) possédant un corps (5), sur lequel est enroulé un morceau de cordon (2) d'une longueur prédéfinie, et le cordon (2) étant à chaque fois respectivement déroulé de la bobine (3) ou enroulé sur la bobine (3), afin de lui conférer la longueur requise pour l'usage spécifique, **caractérisé en ce qu'**une multitude de creux (6) est formée dans la longueur sur chacun des côtés dudit corps (5), ces creux étant capables de retenir le rouleau (7) de cordon (2) qui est enroulé sur le corps (5) de la bobine (3), et **en ce que** le corps (5) possède, au niveau de sa base la plus petite, un autre corps (11) avec un moyen (12) capable de bloquer le cordon (2) qui n'est pas enroulé sur le corps (5) de la bobine (3).

2. Dispositif de commande à tirage par cordon selon la revendication 1, **caractérisé en ce que** le bouton (1) comprend en outre un cache de protection (4) dans lequel est insérée la bobine (3).

3. Dispositif de commande à tirage par cordon selon les revendications 1 ou 2, **caractérisé en ce que** la longueur prédéfinie du morceau de cordon (2) n'est pas inférieure à la hauteur maximale à laquelle le dispositif de commande à tirage par cordon peut être installé.

4. Dispositif de commande à tirage par cordon selon l'une quelconque des précédentes revendications, **caractérisé en ce que** le corps (5) est un corps plat possédant une forme trapézoïdale allongée.

5. Dispositif de commande à tirage par cordon selon l'une quelconque des précédentes revendications, **caractérisé en ce que** le moyen de blocage (12) consiste en une entaille en V formée dans l'autre corps (11) de la bobine (3).

6. Dispositif de commande à tirage par cordon selon l'une quelconque des précédentes revendications, **caractérisé en ce que** le cordon (2), après avoir été bloqué contre le corps (5) de la bobine (3), est inséré dans un trou (13) formé dans l'élément (8) de la bobine (3) et bloqué à l'intérieur, enroulé sur le corps (5) de la bobine (3) en formant une pluralité d'enroulements (7) et bloqué de force dans le moyen de blocage (12).

7. Dispositif de commande à tirage par cordon selon les revendications 2 et 6, **caractérisé en ce que** le cordon (2) est inséré dans un trou débouchant (14) prévu dans le cache de protection (4) du bouton (1), avant d'être inséré dans le trou (13) prévu dans l'élément (8) de la bobine (3) et bloqué à l'intérieur.

8. Dispositif de commande à tirage par cordon selon la revendication 7, **caractérisé en ce que** le bouton (1) est ensuite assemblé en insérant la bobine (3) dans le cache de protection (4) et en laissant sortir l'excédant de cordon (2) du trou débouchant (14) du cache de protection (4).

9. Dispositif de commande à tirage par cordon selon l'une quelconque des revendications 2 à 8, **caractérisé en ce qu'**au niveau de sa base la plus large, le corps (5) possède des moyens de support (9) de l'élément (8), qui sont capables de s'accoupler de façon réversible avec un moyen d'accouplement - complémentaire au moyen (9) - situé à l'intérieur du cache de protection (4) du bouton (1), afin de relier la bobine (3) au cache de protection (4) du bouton (1) lorsque la bobine (3) est entièrement insérée dans un évidement (10) prévu dans le cache de protection (4) du bouton (1).

10. Dispositif de commande à tirage par cordon selon la revendication 9, **caractérisé en ce que** le moyen d'accouplement (9) consiste en une pluralité de dents capables de s'enclencher de façon réversible avec le moyen d'accouplement placé à l'intérieur du cache de protection (4) du bouton (1).

11. Dispositif de commande à tirage par cordon selon les revendications 9 ou 10, **caractérisé en ce que** la surface extérieure de l'élément (8) de la bobine (3) rejoint celle du cache de protection (4) du bouton (1).

12. Dispositif de commande à tirage par cordon selon l'une quelconque des précédentes revendications, **caractérisé en ce que** le cache de protection (4) du bouton (1) possède un trou (14) duquel sort le cordon (2), et un évidement (10), qui est situé dans la région du cache de protection (4) opposée à la région dans laquelle est prévu le trou (14) et qui a une forme complémentaire avec celle de la bobine (3), évidement dans lequel est insérée la bobine (3) dans le but d'assembler le bouton (1).
